# EUROPEAN PATENT APPLICATION

(11) **EP 3 794 934 A1**
(43) Date of publication of application: **24.03.2021**
(21) Application number: 19198091.1
(22) Date of filing: 18.09.2019
(51) Int. Cl.: A01G 7/06, A01G 7/00, G03B 15/06, H04N 1/60, G01J 3/02, G01N 21/84, G06T 7/90, H04N 1/00

(54) **DETECTION OF NUTRIENT DEFICIENCY IN PLANTS**

(71) Applicant: YARA International ASA, 0213 Oslo (NO)
(72) Inventor: Twarakavi, Navin, 159919 Singapore (SG); Toporov, Alexander, 159919 Singapore (SG); Yeon, Taewon, 159919 Singapore (SG); Mehtab, Syed, 159919 Singapore (SG)
(74) Representative: AWA Sweden AB

(57) **Abstract**

A casing (6) for use in a system for estimating a deficiency of a nutrient in a leaf (100) from a plant, and a system and method using such a casing (6). The casing (6) comprises an upper cover (8) adapted to receive an imaging device including a camera (3) and a light source, wherein the upper cover (8) comprises at least one opening (9) to allow the camera (3) and light source to access an interior of the casing (6), a bottom plate (12) having a surface (13) facing the interior of the casing (6), which surface (13) is provided with a pattern including areas having a predefined color, and a side wall (7), wherein, in use, a leaf (100) is placed on the surface (13) and an image (200) is acquired of the leaf (100), whereby the areas allow color calibration of an acquired image.

## Description

### Technical field

The present invention generally relates to the detection of nutrient deficiencies in plants.

### Background of the invention

Nutrient deficiency in plants can slow down growth or lead to stresses which ultimately leads to reduced yield and economic loss to farmers. Examples of nutrients required by plants are macronutrients, secondary nutrients and micronutrients, the macronutrients being consumed in larger quantities by the plants than the micronutrients. Examples of important macronutrients and micronutrients that are important for plant growth include nitrogen and iron, respectively.

Many types of nutrient deficiencies are first noticed by discolorations in the leaves. There are particular discolorations that are observed when a specific nutrient is absent, and it is therefore possible identify a particular deficiency by studying these discolorations. While existing solutions for detecting nutrient deficiencies in plants are available, they are often considered to be inadequate or too complicated. There is thus a perceived need for new solutions.

### Summary of the invention

An objective of the present invention is to provide an improved or alternative solution for detecting nutrient deficiencies in plants.

According to a first aspect of the present invention, this and other objects are achieved by a casing for use in a system for estimating a deficiency of a nutrient in a leaf from a plant, wherein the casing comprises an upper cover adapted to receive an imaging device including a camera and a light source, wherein the upper cover comprises at least one opening to allow the camera and light source to access an interior of the casing, a bottom plate having a surface facing the interior of the casing, which surface is provided with a pattern including areas having a predefined color, and a side wall, wherein the upper cover, the bottom plate, and the side wall together define a space constituting an interior of the casing, wherein, in use, a leaf is placed on the surface and an image is acquired of the leaf, whereby the areas allow color calibration of an acquired image.

The casing helps to create a dark space around the leaf, which helps to increase the quality of the images of the leaf acquired by the imaging device. The walls of the casing, including the top and bottom surfaces, may be a light-blocking (non-transmissive) material so that it prevents natural light to enter the casing and influence the measurement. Further, the casing can be particularly convenient to carry and easy to operate, thereby facilitating the work of agronomists and others who visit different sites where plants grow in order to perform nutrient deficiency estimates. Still further, the casing can be manufactured in a cost-effective manner using low-cost materials and simple manufacturing techniques.

The dark space of the casing helps to acquire images with consistent color reproduction, thus enabling color analysis of the images. However, there are also other sources of color variation, e.g. variation in spectral distribution of light from the light source (flash) and variations in color sensitivity in the image sensor of the camera. For example, light sources of different devices (e.g. different mobile phones) are typically configured to emit white light, but the emitted light may still be different with respect to intensity, color temperature, etc.

For this reason, the pattern according to the present invention is used for color calibration of the acquired image. Specifically, the pattern includes areas of a known color (e.g. white), so that pixels in the acquired image relating to such areas of known color may be used as a color reference. This enables the device to calibrate (correct) the color of the entire acquired image, including the leaf, so as to make it useful for analysis.

The pattern may be black-and-white, such as white dots on a black background.

Different ways are possible to access the interior of the casing. For example, the bottom plate may be removable. Alternatively, the upper cover may be hingedly connected to one of said side walls. In one embodiment, the entire casing is foldable into a substantially flat state. In its flat state, the casing may be more convenient to store and carry.

In one embodiment, the pattern is a repetitive (periodic) pattern, so as to enable detection of a size and/or shape of the leaf in the acquired image. By detecting which white dots that are visible (i.e. not obscured by the leaf) the size and shape can be approximated.

The upper cover may be recessed to accommodate the imaging device, and the casing may further comprise means for temporarily securing the imaging device on the upper lid.

According to a second aspect of the present invention, there is presented a system for estimating a deficiency of a nutrient in a leaf from a plant, wherein the system comprises: a casing according to the first aspect of the present invention; an imaging device, and a processing unit, configured to color calibrate an acquired image, and estimate the deficiency based on an image of the leaf acquired by the imaging device when the leaf is placed inside the casing on the surface of the bottom plate.

The imaging device may for example be a portable imaging device, such as a mobile phone, incorporating also the processing unit.

The second aspect of the present invention may exhibit the same or similar features and technical effects as the first aspect, and vice versa.

The processing unit may be configured to estimate the deficiency based on the image of the leaf by analyzing the imaged leaf along at least two straight lines, wherein each straight line extends in the width direction of the leaf and/or joins two points located on the leaf's margin.

The inventors of the present invention have realized that nutrient deficiencies in plants can be detected by analyzing a relatively small set of data that can be obtained from analyzing judiciously-chosen lines in an image of the leaf. The number of lines depend on the various factors, such as the size and shape of the leaf. The larger the leaf, the more lines are typically defined. At least two lines are usually required to obtain the information needed to reliably estimate whether or not the leaf suffers from a nutrient deficiency and, if so, the type of deficiency.

Analyzing of the imaged leaf along at least two straight lines by the processing device may include: determining a length of each straight line to determine the age of the leaf; gauging the color of the imaged leaf along each straight line; and assessing at least one leaf component along each straight line, and the processing device may be configured to estimate the deficiency based on the determined age, the gauged color, and the assessed at least one leaf component.

It is useful to know the age of the leaf when determining nutrient deficiencies. Most macronutrient deficiencies are exhibited in older leaves as these nutrients are mobile and move to the younger leaves in stress conditions. Most micronutrient deficiencies are, on the other hand, exhibited in the younger leaves as they are not very mobile.

Assessing at least one "leaf component" may for example comprise determining the number of leaf veins which cross the lines and/or determining the sizes of regions between leaf veins. The size of such regions may give an indication of the amount of chlorophyll in the leaf, large regions being associated with large amounts of chlorophyll.

Any deficiency may be estimated e.g. by comparing images of the leaf with images in a reference library. In a more advanced embodiment, a trained machine learning model may be used. Using a machine learning model may help to improve the quality of the estimates.

According to a third aspect of the present invention, there is presented a device for use with a casing according to the first aspect, the device comprising a camera, a light source, and a processing unit configured to perform color calibration of an image acquired by the camera of a leaf placed on a surface of a bottom plate of a casing according to the first aspect.

The processing device may be configured to estimate the deficiency based on the image of the leaf by analyzing the imaged leaf along at least two straight lines, wherein each straight line extends in the width direction of the leaf and/or joins two points located on the leaf's margin.

According to a fourth aspect of the present invention, there is presented a method of determining a deficiency of a nutrient in a leaf, wherein the method comprises placing the leaf on the surface provided with the black-and-white pattern of the bottom plate of the casing according to the first aspect of the present invention, positioning an imaging device on the upper cover of the casing, acquiring an image of the leaf by the imaging device when the leaf is placed inside the casing on the surface of the bottom plate, using the pattern to color calibrate the acquired image; and estimating said deficiency by processing the color calibrated image.

The processing may include analyzing the imaged leaf along at least two straight lines, wherein each straight line extends in the width direction of the leaf and/or joins two points located on the leaf's margin.

The method may further include: determining a length of each straight line to determine the age of the leaf; gauging the color of the imaged leaf along each straight line; and assessing at least one leaf component along each straight line, wherein the method further comprises: estimating the deficiency based on the determined age, the gauged color, and the assessed at least one leaf component.

The method according to the fourth aspect of the present invention may further comprise determining a fertilization for the plant based on the estimated deficiency. The method makes it possible to recommend a fertilization for the plant a particularly simple and fast manner. For example, if it is determined that the plant lacks iron, then the recommendation may be to give the plant a certain amount of iron or simply to give the plant more iron.

### Brief description of the drawings

These and other aspects of the present invention will now be described in more detail, with reference to the appended drawings showing a currently preferred embodiment of the invention. The invention is however not limited to the disclosed embodiments.
Figure 1 is a schematic perspective view of a system according to an embodiment of the present invention.
Figure 2 is a schematic image of a leaf.
Figure 3 is a flowchart of a method according to an embodiment of the present invention.
Figure 4 is a perspective view of a casing according to an embodiment of the invention.

### Detailed description

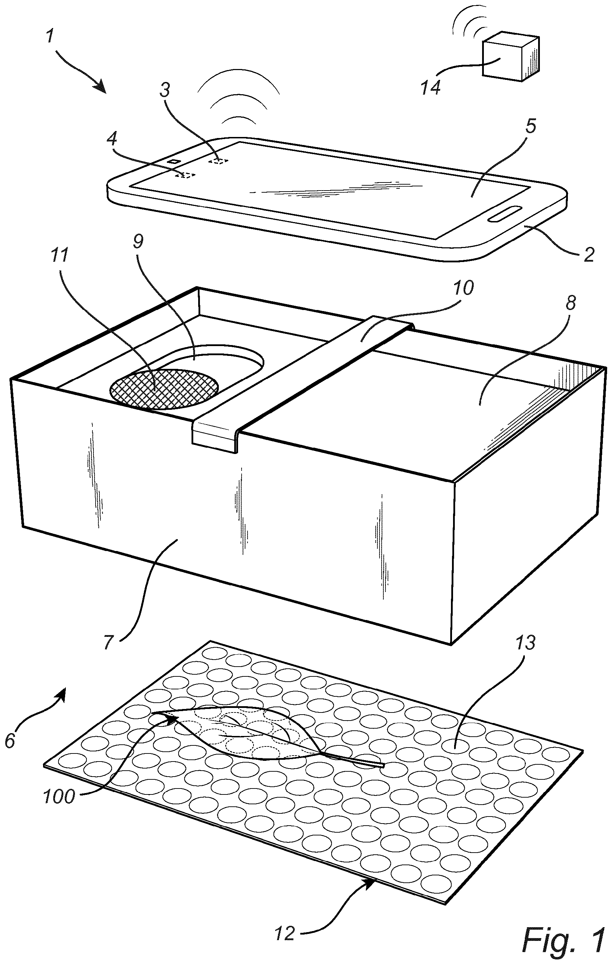

Figure 1 shows a system 1 for estimating a deficiency of a nutrient in a leaf 100 which has been removed from a plant. Thus, the leaf 100 may alternatively be referred to as a plant leaf. The system 1 comprises an imaging device 2 comprising a camera 3 and a light source (flash) 4. The imaging device 2 is here a conventional mobile phone with an integrated camera and flash. In Figure 1, the camera 3 and the flash 4 are located next to each other on the side of the imaging device 2 facing downwards. In a different example, the imaging device 2 may be of a different type, such as a camera which is not integrated with a mobile phone. The imaging device 2 here also comprises a screen 5. A user can see the images acquired by the imaging device 2 as well as other pieces of information on the screen 5. The imaging device 2 is in this case configured for wireless communication with remote devices. Specifically, the imaging device 2 is in this case capable of sending and receiving Wi-Fi signals and mobile network signals, such as GSM signals and LTE signals.

The system 1 further comprises a casing 6. The casing 6 is in this case a rectangular casing. More specifically, the casing 6 has a side wall 7 and an upper cover 8. The upper cover 8 is adapted to receive the imaging device 2, and is here essentially flat. In the illustrated case, the side wall 7 has four faces forming a rectangular shape, but the side wall could have been a smooth cylinder, e.g. forming an oval shape.

The upper cover 8 is provided with an opening 9 for allowing the camera 3 and flash 4 to view inside the casing 6 when the imaging device 2 is arranged on the upper cover 8. The upper cover 8 is connected to the side wall 7, in this case close to an upper edge of the side wall 7. As can be seen in Figure 1, the upper cover 8 is in this case recessed.

The casing 6 further comprises an optional means 10 for temporarily securing the imaging device 2 on the upper cover 8, here a strap 10. The strap 10 passes from one of the faces of the side wall 7 to another, across the upper cover 8. The strap 10 is in this case made of an elastic material.

The casing 6 may also comprise a light diffuser 11 which is arranged to diffuse light emitted by the flash 4 when the imaging device 2 is placed on the upper cover 8. The light diffuser 11 here covers a part of the opening 9. The light diffuser 11 can for example be a thin sheet of paper, plastic or glass. Such a diffuser can be relatively inexpensive to manufacture.

The casing 6 further comprises a bottom plate 12. The bottom plate 12 is in this case flat and rectangular, but may have a different shape in a different example. During use of the system 1, the bottom plate 12, together with the side wall 7 and the upper cover 8, defines a space which constitutes the interior of the casing 6.

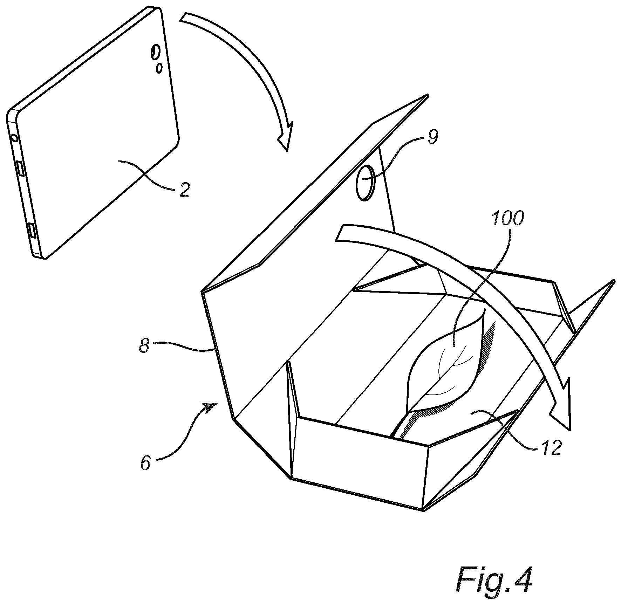

As shown in the figure 1, the bottom plate may be removable, in order to enable access of the interior of the casing. In another embodiment, shown in figure 4, the entire casing is foldable, and the upper cover is hingedly connected to one of the side wall faces. The upper cover 8 may thus be opened in order to access the interior. In figure 4, two of the faces of the side wall 7 can be folded inwards, down towards the bottom plate 12, so that the casing reaches an essentially flat state. Of course, the casing 6 may be foldable in a different manner than in the presently described example.

The casing 6 should be non-transmissive to light, to ensure that ambient light cannot enter the interior in use. The casing may be made of for example cardboard, a plastic material or a metal, or any other suitable material.

The bottom plate 12 has a surface 13 which, during use of the system 1, faces the inside of the casing 6 and on which the leaf 100 is placed. The surface 13 is provided with a pattern including areas of a predefined color. In the illustrated case, the predefined color is white. The pattern is adapted for calibration with respect to light emitted by the flash 4 and also for measuring the size of the leaf 100. In this case, the pattern is black-and-white and comprises a plurality of white dots on a black background. The pattern is preferably repetitive (periodic), with a period preferably in the order of 10 mm or less. Here, the white dots are here arranged in straight rows. In a different example, the pattern may of course comprise some other type of symbol than circles, such as rectangles or some other polygon, and the symbols may do not have to be arranged in straight rows. For example, the symbols may form a periodic zigzag pattern.

The system further comprises a processing device 14 which is configured to estimate nutrient deficiencies in the leaf 100 based on an image thereof acquired by the imaging device 2. The processing device 14 is in this case arranged remotely to the casing 6 and the imaging device 2. The processing device 14 and the imaging device 2 are capable of communicating wirelessly with each other over some type of network, such as a Wi-Fi network, a mobile network, or a combination of different types of networks. Examples of mobile networks which the processing device 14 may be configured to use include GSM networks and LTE networks. It is noted that, in a different example, the processing device 14 may be integrated with the imaging device 2. Alternatively, the processing device may be incorporated in the imaging device. It may, for example, be the processor of a mobile phone.

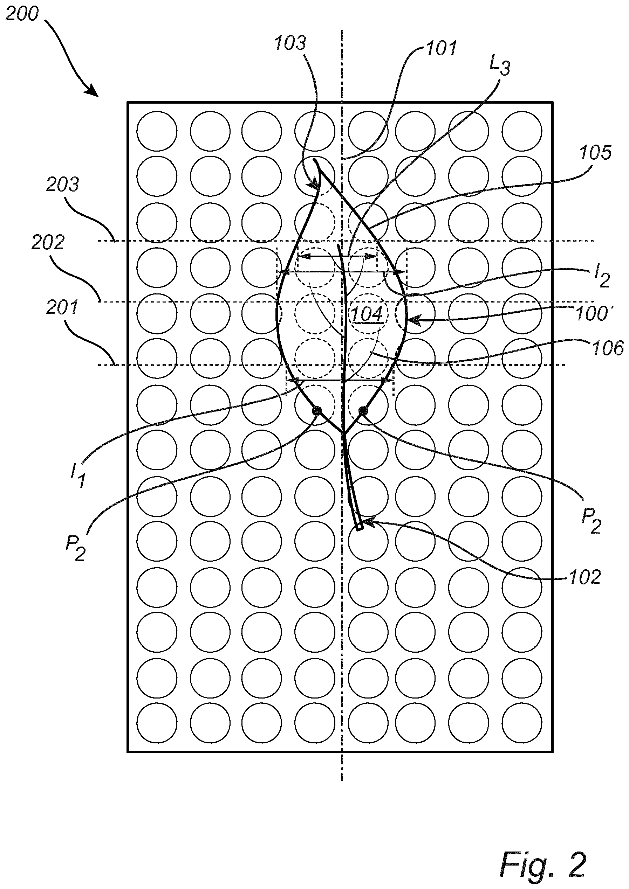

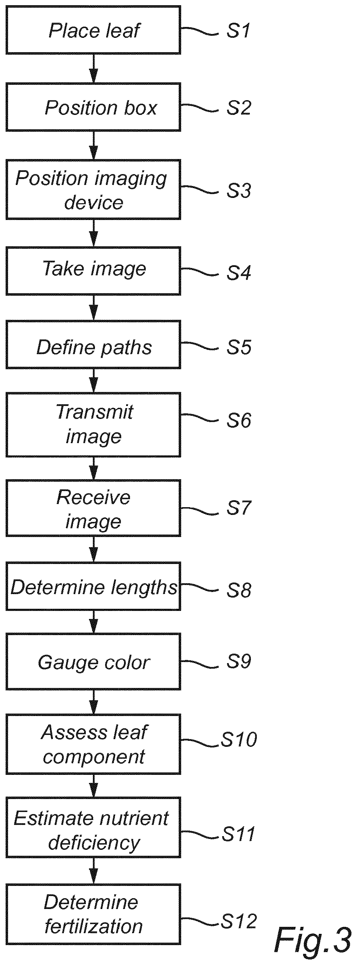

With reference to Figures 2 and 3, a method for estimating a deficiency of a nutrient in the leaf 100 will now be described. In this case, the method is performed using the system 1 described above, and continued reference will therefore be made to Figure 1.

At step S1, the leaf 100 is placed on the bottom plate 12. Specifically, the leaf 100 is placed on the surface 13 with the black-and-white pattern.

At step S2, the casing 6 is positioned over the bottom plate 12. Thereby, the leaf 100 is enclosed in a dark space.

At step S3, the imaging device 2 is positioned on the upper cover 8. The imaging device 2 is positioned such that the camera 3 is aligned with the part of the opening 9 where the light diffuser 11 is not located and such that the flash 4 is aligned with the light diffuser 11. Thus, the camera 3 has direct line of sight into the casing 6. Further, the imaging device 2 is here positioned below the strap 10, which thereby helps to keep the imaging device 2 in place on the casing 6.

At step S4, the imaging device 2 acquires an image 200 of the leaf 100 placed inside the casing 6 on the surface 13. The image 200 is acquired using the camera 3 and the light source (flash) 4.

The pattern on the surface 13 serves to enable color calibration of the acquired image. Specifically, the (known) color of the white areas (dots) may serve as a reference color, which enables the processing device 14 to calibrate (correct) the color of the leaf in the acquired image.

The pattern on the surface 13 further serves to facilitate determination of size and shape of the leaf. Specifically, suitable image processing may detect which dots that are obscured by the leaf, and thereby determine the shape and size of the leaf. This may eliminate the need for more complex and expensive image processing.

The acquired image 200 of the leaf 100 is shown in Figure 2. The imaged leaf is denoted by the reference numeral 100' in Figure 2.

As is shown in Figure 2, the leaf 100 has a central line 101 extending from a first end 102 of the leaf 100 to a second end 103 of the leaf 100. When the leaf 100 was still attached to the plant, the first end 102 was proximal to the plant and the second end 103 was distal to the plant. The first end 102 may be referred to as the base of the leaf 100, and the second end 103 may be referred to as the tip of the leaf 100. The leaf 100 has a major surface 104 and a margin 105. The leaf 100 is positioned inside the casing 6 such that the major surface 104 faces the imaging device 2, and the other major surface of the leaf 100 faces, and is in touching contact with, the bottom plate 12.

The leaf 100 is here approximately symmetrical around the central line 101, and the discolorations that may appear in leaves due to nutrient deficiencies are typically approximately symmetrical about the central line 101. By understanding the dis-coloration pattern around the principal axis, one could qualitatively and quantitatively (in some cases) estimate the nutrient deficiency. The principles of such analysis are known per se, and will not be discussed in further detail. However, in the following will be described a process according to an embodiment of the present invention, for obtaining useful input data for such an analysis.

At step S5, the imaging device 2 transmits the image 200 to the processing device 14. The image 200 is in this case sent wirelessly from the imaging device 2 to the processing device 14.

At step S6, the processing device 14 receives the image 200 from the imaging device 2. After having received the image 200, the processing device 14 starts analyzing the image 200 of the leaf 100. In this case, the processing device 14 analyzes the image 200 to see whether or not the leaf 100 suffers from nitrogen deficiency. The leaves of a plant that does not receive enough nitrogen turn yellow. The greater the nitrogen deficiency, the more yellow the leaves turn. It is noted that, in a different example, the processing device 14 may check for some other type of nutrient deficiency or for more than one type of nutrient deficiency.

The leaves of many plants have a rich green color when healthy. Discolored leaves may indicate that the plant is not receiving enough of one or more nutrients. For example, nitrogen deficiency is typically manifested by the leaf becoming less green and more yellow. Further, reddish-purple marks on the leaf may indicate a phosphor shortage, whitish stripes may indicate a magnesium deficiency, and a drought may cause the leaf to become grayish-green. It is noted that, since some type of diseases and chemicals cause discoloration in leaves, the system 1 may also be used to detect discolorations due to diseases and chemical exposure.

At step S7, the processing device 14 defines at least two lines in the image 200. In this case a first line 201, a second line 202 and a third line 203 are defined. The lines 201, 202, 203 are in this case straight and parallel. Each one of the lines 201, 202, 203 here extends in the width direction of the leaf 100 and joins two points located on the margin 105. The two points denoted joined by the first line 201 are denoted by P₁ and P₂, respectively in Figure 2. The point P₁ is located on one side of the central line 101 and that the other point P₂ is located on the other side of the central line 101. As is also clear from Figure 2, the lines 201, 202, 203 here also extends beyond the margin 105 and into the region of the image 200 where the black-and-white pattern 13 is visible.

Further, the lines 201, 202, 203 are separated along the central line 101. Using paths 201, 202, 203 that are not too close together may improve the nutrient deficiency estimate as they provide information from a larger part of the leaf. The second line 202 is here located approximately halfway along the central line 101 between the first end 102 and the second end 103. The first line 201 is here located approximately halfway along the central line 101 between the first end 102 and the second line 202. The third line 203 is here located approximately halfway along the central line 101 between the second end 103 and the second line 202.

It is noted that, in a different example, the lines 201, 202, 203 may be defined in a different manner. For instance, the lines may cover only the part of the image where the leaf 100 is represented and/or arranged at other positions along the central line 101 than shown in Figure 2. Also, the lines 201, 202, 203 may be non-parallel.

At step S8, the processing device 14 determines the length of each line 201, 202, 203 in order to determine the age of the leaf 100. The lengths of the lines 201, 202, 203 are denoted by l₁, l₂ and l₃, respectively, in Figure 2. Determining the lengths of the lines 201, 202, 203 allows for the width of the leaf 100 at different positions, and hence its age, to be estimated.

At step S9, the processing device 14 gauges the color of the leaf 100 along each one of the lines 201, 202, 203. Specifically, in this case, gauging the color of the leaf 100 comprises determining the variation of the color yellow along the lines 201, 202, 203. The gauging performed at step S9 may comprise determining how another color than yellow, or how several colors, vary along the lines 201, 202, 203, depending on the nutrient deficiency or deficiencies the user of the system 1 is looking for. Step S9 may be performed using conventional image analysis software.

At step S10, the processing device 14 assesses at least one leaf component along each one of the lines 201 202, 203. For example, the processing device 14 may count the number of veins that cross each path 201, 202, 203 or estimate the amount of chlorophyll along the lines 201, 202, 203. Step S10 may be performed using conventional image analysis software.

At step S11, the processing device 14 estimates a nutrient deficiency of the leaf 100. To this end, the processing device 14 uses the age determined in step S8, the color gauged in step S9, and the leaf component characteristic determined in step S10. In this case, the processing device 14 also uses a machine learning model and a library of discoloration trends when estimating the nutrient deficiency. Specifically, the processing device 14 here estimates whether the leaf 100 show signs of not having received enough nitrogen.

At step S12, the processing device 14 determines a fertilization recommendation for the plant from which the leaf 100 was removed. In this case, if it is determined at step S11 that the leaf 100 has not been getting nitrogen the recommendation may be to give a particular amount of nitrogen, or simply more nitrogen, to the plant. The processing device 14 is in this case configured to send the fertilization recommendation to the imaging device 2. The imaging device 2 displays the received recommendation on the screen 5.

It is noted that the step S12 is optional and may be omitted in a different example. In such case, the processing device 14 may for example send a result of the step S11, such as whether or not the leaf 100 suffers from a certain nutrient deficiency and/or the degree to which the leaf suffers from such a deficiency, to the imaging device 2, without including a fertilization recommendation. The user may then decide whether or not the plant should be given any type of fertilization, based on the information provided to him or her.

It is noted that the steps S7 to S10 may be performed simultaneously or in a different order than described above. Further, it is noted that the steps S1 to S5 may be referred to as a method for acquiring and transmitting an image of the leaf 100 and that the steps S6 to S11 may be referred to as a method of receiving an image of a leaf and estimating a deficiency of a nutrient in the leaf.

While the present invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and method, and illustrative example shown and described. Accordingly, departures may be made from such details without departing from the gist or scope of the applicant's general inventive concept. For example, the shape and design of the casing may be different than what has been disclosed herein, as long it provides the required function. The details in the analysis process, e.g. the selection and order of steps, may also be modified when implementing the invention.

## Claims

1. A casing (6) for use in a system (1) for estimating a deficiency of a nutrient in a leaf (100) from a plant, wherein the casing (6) comprises:
an upper cover (8) adapted to receive an imaging device (2) including a camera (3) and a light source (4), wherein the upper cover (8) comprises at least one opening (9) to allow the camera (3) and light source (4) to access an interior of the casing (6);
a bottom plate (12) having a surface (13) facing the interior of the casing (6), which surface (13) is provided with a pattern including areas having a predefined color; and
a side wall (7), wherein the upper cover (8), the bottom plate (12), and the side wall (7) together define a space constituting an interior of the casing (6),
wherein, in use, a leaf (100) is placed on said surface (13) and an image is acquired of said leaf, whereby said areas allow color calibration of an acquired image.

2. The casing (6) according to claim 1, wherein said bottom plate is removable, to allow access to said interior space.

3. The casing (6) according to claim 1, wherein the upper cover (8) is hingedly connected to one of said side walls (7) to allow access to said interior.

4. The casing (6) according to claim 3, wherein said casing is foldable into a substantially flat state.

5. The casing (6) according to one of the preceding claims, wherein said pattern is black-and-white, such as white dots on a black background.

6. The casing (6) according to one of the preceding claims, wherein the pattern is a repetitive pattern, so as to enable detection of a size and/or shape of the leaf (100) in the acquired image.

7. The casing (6) according to any of the preceding claims, wherein the upper cover (8) is recessed to accommodate the imaging device (2).

8. The casing (6) according to one of the preceding claims, wherein the casing (6) further comprises means (10) for temporarily securing the imaging device (2) on the upper cover (8).

9. The casing (6) according to one of the preceding claims, further comprising a light diffuser (11) arranged to cover a portion of the at least one opening (9) for diffusing light emitted by said light source (4).

10. A system (1) for estimating a deficiency of a nutrient in a leaf (100) from a plant, wherein the system (1) comprises:
a casing (6) according to any of the preceding claims;
an imaging device (2) including a camera (3) and a light source (4), said imaging device being compatible with the casing (8); and
a processing unit (14) configured to estimate the deficiency based on an image (200) of the leaf (100) acquired by the imaging device (2) when the leaf (100) is placed inside the casing (6) on said surface (13) of the bottom plate (12).

11. The system (1) according to claim 10, wherein the processing device (14) is configured to analyze the acquired image (200) along at least two straight lines (201, 202, 203), wherein each straight line (201, 202, 203) extends in the width direction of the leaf and/or joins two points located on the leaf's margin (105).

12. The system (1) according to claim 11, wherein analyzing the acquired image along at least two straight lines includes:
determining (S8) a length of each straight line (201, 202, 203) to determine the age of the leaf (100);
gauging (S9) the color of the imaged leaf (100') along each straight line (201, 202, 203); and
assessing (S10) at least one leaf component along each straight line (201, 202, 203),
wherein the processing device (14) is configured to estimate (S11) the deficiency based on the determined age, the gauged color, and the assessed at least one leaf component.

13. The system (1) according to any one of the claims 10-12, wherein the imaging device (2) and the processing device (14) are integrated in a single handheld device, such as a tablet or a mobile phone.

14. A device for use with a casing according to one of claims 1-9, said device comprising:
a camera (3),
a light source (4), and
a processing unit configured to perform color calibration of an image acquired by the camera (3) of a leaf placed on a surface of a bottom plate of a casing according to one of claims 1-9.

15. A method of determining a deficiency of a nutrient in a leaf (100), wherein the method comprises:
placing (S1) the leaf (100) on the surface (13) of the bottom plate (12) of a casing (16) according to any one of the claims 1-9;
positioning (S3) an imaging device (2) on the upper cover (8) of the casing (6);
acquiring (S4) an image (200) of the leaf (100) by the imaging device (2) when the leaf (100) is placed inside the casing (6) on said surface (13) of the bottom plate (12);
using said pattern (12) to color calibrate the acquired image; and
estimating (S11) said deficiency by processing the color calibrated image (200).

16. The method according to claim 15, wherein said processing includes analyzing the imaged leaf (100') along at least two straight lines (201, 202, 203), wherein each straight line (201, 202, 203) extends in the width direction of the leaf (100) and/or joins two points located on the leaf's margin (105).
